# EUROPÄISCHE PATENTANMELDUNG

(11) **EP 4 545 276 A1**
(43) Veröffentlichungstag der Anmeldung: **30.04.2025**
(21) Anmeldenummer: 23205692.9
(22) Anmeldetag: 25.10.2023
(51) Int. Cl.: B29C 64/118, B29C 64/209, B33Y 10/00, B33Y 30/00

(54) **DÜSE FÜR EINE VORRICHTUNG ZUM SCHICHTWEISEN AUFBAU EINES BAUTEILS, VORRICHTUNG MIT EINER SOLCHEN DÜSE UND VERFAHREN ZUR HERSTELLUNG EINES BAUTEILS**

(71) Anmelder: Sika Technology AG, 6340 Baar (CH)
(72) Erfinder: GÖHLICH, Benjamin, 72585 Riederich (DE); POLZFUSS, Christian, 72574 Bad Urach (DE)
(74) Vertreter: Sika Patent Attorneys

(57) **Zusammenfassung**

Die Erfindung betrifft eine Düse (10) für eine Vorrichtung zum schichtweisen Aufbau eines Bauteils, insbesondere zum 3D-Drucken eines Rohlings, mit einem Grundkörper (11) und wenigstens einem durch den Grundkörper (11) verlaufenden Düsenkanal (12), wobei der Düsenkanal (12) einen ersten Kanalabschnitt (13) mit einer Eintrittsöffnung (14) und einen anschließenden, zweiten Kanalabschnitt (15) mit einer Austrittsöffnung (16) für ein viskoses Materialgemisch, insbesondere 2-Komponentensystem, aufweist, wobei sich der zweite Kanalabschnitt (15) ausgehend von dem ersten Kanalabschnitt (13) derart erweitert, dass die Austrittsöffnung (16) einen Austrittsdurchmesser D_{A} aufweist, der größer als ein Durchmesser D_{E} der Eintrittsöffnung (14) ist.

## Beschreibung

Die Erfindung betrifft eine Düse für eine Vorrichtung zum schichtweisen Aufbau eines Bauteils, eine Vorrichtung mit einer solchen Düse und ein Verfahren zur Herstellung eines Bauteils. Eine Düse nach dem Oberbegriff des Patentanspruchs 1 ist beispielsweise aus der DE 20 2012 001 873 U1 bekannt.

In den vergangenen Jahren hat sich eine Methode zur Herstellung von Teilen als besonders vorteilhaft herausgestellt, nämlich die Herstellung von Teilen per 3D-Druckverfahren. Derartige Teile werden herkömmlicherweise als digitales Modell, bspw. CAD-Modell, erstellt und auf Basis der Modelldaten durch eine entsprechende Druckvorrichtung realisiert. In der Regel handelt es sich beim 3D-Druck um ein additives Verfahren, bei dem aufeinanderfolgende Schichten auf vorherige Schichten aufgetragen werden, um die Kontur eines Teils schichtweise aufzubauen. Zur Bildung der Schichten wird häufig ein viskoses Kunststoffmaterial verwendet.

Um das zu erstellende Teil schichtweise aufzubauen, umfassen die Druckvorrichtungen Düsen, durch die das Kunststoffmaterial geführt wird. Beispielsweise ist aus der EP 3 658 355 A1 eine Druckvorrichtung mit einer Düse bekannt, die sich in herkömmlicherweise zur Düsenspitze hin verjüngt, um so eine dünne Schicht auftragen zu können. Derartige Düsen sind vorteilhaft bei der Herstellung von Teilen mit geringer Wandstärke. Zur Herstellung von Teilen mit erhöhter Wandstärke ist es notwendig, mit einer solchen Düse Materialwülste oder - raupen zur Bildung einer breiteren Druckschicht nebeneinander anzuordnen. Dies hat den Nachteil, dass es zu Lufteinschlüssen zwischen den nebeneinander angeordneten Materialwülsten- oder raupen kommt, was sich negativ auf die Qualität und Stabilität des Teils auswirkt.

Aus dem Stand der Technik sind des Weiteren Düsen bekannt, die einen breiten Auftrag von Kunststoffmaterial ermöglichen. Beispielsweise beschreibt die eingangs genannte DE 20 2012 001 873 U1 eine Auftragsdüse zum Auftragen eines gemischten, fließfähigen Kunststoffmaterials auf einen Formkern, um Formteile aus Kunststoff herzustellen. Die Auftragsdüse weist eine rechteckförmige Austrittsöffnung auf, sodass ein möglichst großflächiger Auftrag in kurzer Zeit realisierbar ist. Für den herkömmlichen 3D-Druck sind solche Auftragsdüsen jedoch ungeeignet.

Der Erfindung liegt die Aufgabe zu Grunde, eine Düse bereitzustellen, die einen verbesserten, schichtweisen Aufbau zur Herstellung eines Bauteils mit erhöhter Wandstärke ermöglicht und vielseitig einsetzbar ist. Der Erfindung liegt ferner die Aufgabe zu Grunde, eine Vorrichtung mit einer solchen Düse und ein Verfahren zur Herstellung eines Bauteils anzugeben.

Erfindungsgemäß wird diese Aufgabe im Hinblick auf die Düse durch den Gegenstand der Anspruchs 1 gelöst. Hinsichtlich der Vorrichtung und des Verfahrens wird die vorstehend genannte Aufgabe jeweils durch den Gegenstand des Anspruchs 10 (Vorrichtung) und des Anspruchs 13 (Verfahren) gelöst.

Konkret wird die Aufgabe durch eine Düse für eine Vorrichtung zum schichtweisen Aufbau eines Bauteils, insbesondere zum Drucken eines Rohlings, mit einem Grundkörper und wenigstens einem durch den Grundkörper verlaufenden Düsenkanal gelöst. Der Düsenkanal weist einen ersten Kanalabschnitt mit einer Eintrittsöffnung und einen anschließenden, zweiten Kanalabschnitt mit einer Austrittsöffnung für ein viskoses Materialgemisch, insbesondere 2-Komponentensystem, auf, wobei sich der zweite Kanalabschnitt ausgehend von dem ersten Kanalabschnitt derart erweitert, dass die Austrittsöffnung einen Austrittsdurchmesser D_{A} aufweist, der größer als ein Durchmesser D_{E} der Eintrittsöffnung ist.

Die Erfindung hat den wesentlichen Vorteil, dass durch die vergrößerte Austrittsöffnung des zweiten Kanalabschnitts und somit der Düse bei der Herstellung eines Bauteils eine breitere Materialwulst zum schichtweisen Aufbau, insbesondere 3D-Drucken, eines Bauteils bereitgestellt wird. Dadurch sind, abhängig von dem Austrittsdurchmesser D_{A} der Austrittsöffnung der Düse, Bauteile mit erhöhter Wandstärke, durch aufeinander aufgetragene Materialwülste oder - raupen herstellbar.

Die erfindungsgemäße Düse ermöglicht somit die Herstellung einer erhöhten Bauteilwandstärke, indem sie durch die vergrößerte Austrittsöffnung breitere Materialwülste bzw. -raupen bereitstellt. Ein nebeneinander Anordnen von Materialwülsten bzw. -raupen zur Bildung einer erhöhten Bauteilwandstärke entfällt dadurch. Dies hat den großen Vorteil, dass der negative Effekt, wonach Lufteinschlüsse zwischen nebeneinander angeordneten Wülsten oder Raupen entstehen, vorgebeugt wird. Mit der erfindungsgemäßen Düse sind somit schichtweise aufgebaute Bauteile, insbesondere 3D-gedruckte Bauteile, mit erhöhter Qualität und Stabilität herstellbar. Ferner ermöglicht die Düse die Herstellung solcher Bauteile in verkürzter Zeit.

Hinzukommend ist die erfindungsgemäße Düse vielseitig einsetzbar. Besonders bevorzugt kommt die Düse zum 3D-Drucken eines Bauteils zum Einsatz. Beim 3D-Drucken werden über die Düse Materialwülste zur Bildung einer Bauteilkontur aufeinander aufgetragen. Bevorzugt wird ein viskoses Materialgemisch eingesetzt, das ein 2-Komponentensystem ist. Die Verwendung von anderen zum schichtweisen Aufbau von Bauteilen geeigneten Materialgemischen ist möglich.

Alternativ kann die erfindungsgemäße Düse auch zum Auftrag von Modellierpasten auf einen Formkern verwendet werden, um Formteile zu erstellen. Andere Anwendungsgebiet sind möglich.

Der Durchmesser D_{E} der Eintrittsöffnung der erfindungsgemäßen Düse ist also kleiner als der Austrittsdurchmesser D_{A} der Austrittsöffnung des Düsenkanals. Somit erfolgt eine Durchmessererweiterung zur Austrittsöffnung des Düsenkanals hin, bevorzugt in Durchflussrichtung des Materialgemisches. Der Durchmesser D_{E} der Eintrittsöffnung kann bspw. 5 mm bis 30 mm, insbesondere 10 mm bis 20 mm, bevorzugt 12 mm bis 18 mm, betragen. Der Austrittsdurchmesser D_{A} der Austrittsöffnung kann bspw. 15 mm bis 60 mm, insbesondere 20 mm bis 50 mm, bevorzugt 25 mm bis 40 mm, betragen. Es wird darauf hingewiesen, dass die Erfindung nicht auf die vorgenannten Durchmesserbereich beschränkt ist. Der Durchmesser D_{E} der Eintrittsöffnung des ersten Kanalabschnitts kann kleiner als 5 mm oder größer als 30 mm sein. Der Austrittsdurchmesser D_{A} der Austrittsöffnung des zweiten Kanalabschnitts kann kleiner als 15 mm oder größer als 60 mm sein.

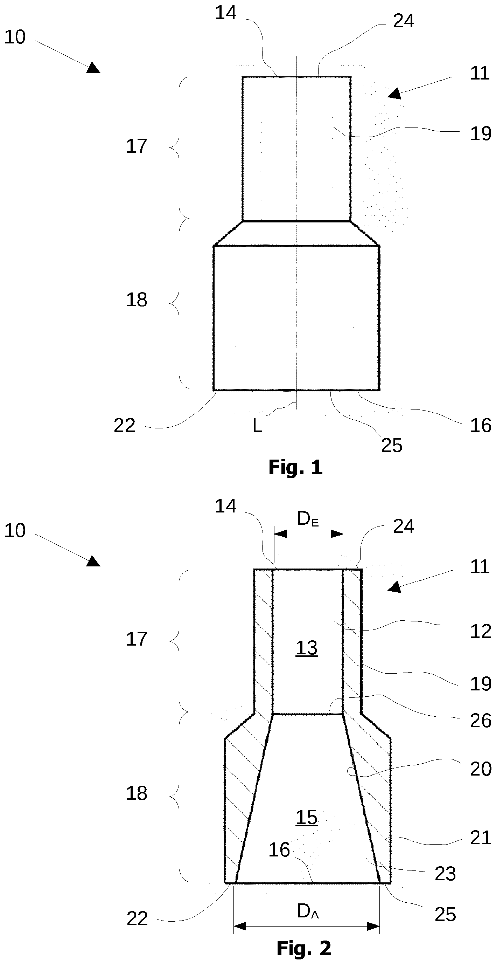

Der "Durchmesser D_{E}" und der "Austrittsdurchmesser D_{A}" bezeichnen im Kontext der hier angegebenen Erfindung den größten Innenabstand zwischen den Düsenwänden (wie in Figur 2 gezeigt), d.h. es ist nicht ausgeschlossen, dass die Eintrittsöffnung und/oder die Austrittsöffnung, abhängig von der Raumrichtung, unterschiedliche Durchmesser aufweist, wenn z.B. die jeweilige Öffnung nicht mit einem Kreisquerschnitt ausgebildet ist (möglich ist beispielsweise eine ovale Form). Im Kontext der hier angegebenen Erfindung ist es jedoch bevorzugt, wenn der größte Durchmesser der Eintritts- bzw. Austrittsöffnung um nicht mehr als 100% größer ist als der kleinste Durchmesser der Eintritts- bzw. Austrittsöffnung. In einer besonders bevorzugten Ausführungsform hat die Eintrittsöffnung einen kreisförmigen Querschnitt und ganz besonders bevorzugt ist es, wenn zusätzlich auch die Austrittsöffnung einen kreisförmigen Querschnitt aufweist. In einer weiteren besonders bevorzugten Ausführungsform hat die Eintrittsöffnung einen kreisförmigen Querschnitt und die Austrittsöffnung einen ovalen Querschnitt, wobei der größte Durchmesser der Austrittsöffnung um nicht mehr als 100% größer ist als der kleinste Durchmesser der Austrittsöffnung, weiter bevorzugt wobei der größte Durchmesser um 10 bis 50% größer ist als der kleinste Durchmesser der Austrittsöffnung.

Die Eintrittsöffnung des ersten Kanalabschnitts bildet ein erstes Ende des Düsenkanals und die Austrittsöffnung des zweiten Kanalabschnitts ein zweites Ende des Düsenkanals. Die Eintrittsöffnung und die Austrittsöffnung sind bevorzugt in Düsenlängsrichtung einander gegenüber angeordnet.

Vorteilhafte Ausführungsformen der Erfindung sind in den abhängigen Ansprüchen angegeben.

Bei einer bevorzugten Ausführungsform vergrößert sich der Durchflussquerschnitt des Düsenkanals entlang seines Verlaufs ausgehend von dem ersten Kanalabschnitt bis hin zu Austrittsöffnung des zweiten Kanalabschnitts. Es ist vorteilhaft, wenn sich der Durchflussquerschnitt des ersten Kanalabschnitts bis hin zur Austrittsöffnung des zweiten Kanals ausschließlich vergrößert. Mit anderen Worten ist es von Vorteil, wenn im Verlauf des Düsenkanals von dem ersten Kanalabschnitt bis hin zur Austrittsöffnung ausschließlich die Erweiterung des Durchflussquerschnitts erfolgt. Dies ermöglicht ein verlustfreies Durchströmen des Materialgemisches bei der Herstellung.

Besonders bevorzugt ist der Düsenkanal hinterschneidungsfrei, insbesondere totraumfrei, ausgebildet. Dies betrifft vorzugsweise den zweiten Kanalabschnitt. Zusätzlich kann der erste Kanalabschnitt ebenso hinterschneidungsfrei ausgebildet sein. Dies hat den Vorteil, dass bei dem Auftrag keine Teilmengen des viskosen Materialgemisches in der Düse verbleiben, sondern das Gemisch, ohne sich in Nischen oder dergleichen abzulagern, den entsprechenden Kanalabschnitt verlustfrei durchströmt. Dadurch ist das Risiko eines Verstopfens der Düse reduziert sowie die Qualität des Materialauftrags stets hoch.

Vorzugsweise ist der zweite Kanalabschnitt in Durchflussrichtung hinterschneidungsfrei. Das bedeutet, dass in Durchflussrichtung keine radial nach innen vorstehenden Konturen des Grundkörpers oder von zusätzlichen Elementen vorgesehen sind, die ein Ablagern, Aufstauen oder dergleichen des Materialgemischs ermöglichen.

Vorzugsweise weist der erste Kanalabschnitt über seine Länge einen im Wesentlichen gleichbleibenden Querschnitt auf. Der gleichbleibende Querschnitt des ersten Kanalabschnitts weist bevorzugt als Durchmesser den Durchmesser D_{E} des ersten Kanalabschnitts auf. Mit anderen Worten weist der erste Kanalabschnitt über seine gesamte Länge den Durchmesser D_{E} der Eintrittsöffnung auf. Alternativ kann der erste Kanalabschnitt zumindest abschnittsweise unterschiedliche Querschnitte, insbesondere Durchflussquerschnitte, aufweisen.

Zusätzlich oder alternativ weist der zweite Kanalabschnitt vorzugsweise einen sich über seine Länge kontinuierlich, insbesondere ausschließlich, erweiternden Durchflussquerschnitt auf. Mit anderen Worten ist der zweite Kanalabschnitt bevorzugt frei von scharfkantigen Übergängen, insbesondere ausgehend von dem ersten Kanalabschnitt bis hin zur Austrittsöffnung. Oder anders gesagt, ist der zweite Kanalabschnitt vorzugsweise stufenfrei ausgebildet. Dies ermöglicht einen sich gleichmäßig ausbreitenden Materialfluss des Materialgemisches bei einem Auftragsvorgang, ohne dass sich Teilmengen in Nischen oder Hinterschnitten ablagern.

Bei einer Ausführungsform ist der erste Kanalabschnitt zylinderförmig und/oder der zweite Kanalabschnitt konusförmig ausgebildet. Der Kanalabschnitt ist bspw. rohrförmig ausgebildet. Besonders bevorzugt ist aber der zweite Kanalabschnitt als Innenkonus ausgebildet, der sich von dem ersten Kanalabschnitt bis hin zur Austrittsöffnung erweitert. Der Innenkonus umfasst in diesem Fall den Austrittsdurchmesser D_{A}. Die konusförmige Ausbildung des zweiten Kanalabschnitts ist die geometrisch optimale Form, um einen Materialauftrag mit erhöhter Wulstbreite zu realisieren. Dadurch lassen sich erhöhte Bauteilwanddicken in einem Auftragsvorgang herstellen. Ein nebeneinander Auftragen von Wülsten kann entfallen.

Der zweite Kanalabschnitt kann sich mit einem Winkel zwischen 0° und 30°, insbesondere 5° und 20°, bevorzugt im Wesentlichen 15° zur Austrittsöffnung hin erweitern. Der Winkel entspricht vorzugsweise dem Flankenwinkel des Innenkonus. Der Winkel ist vorzugsweise zwischen einer Verlängerung des ersten Kanalabschnitts und einer Innenwand des zweiten Kanalabschnitts aufgespannt. Mit anderen Worten betrifft der Winkel vorzugsweise jenen Winkel, mit dem die Innenkontur des zweiten Kanalabschnitts in Bezug auf eine Innenkontur des ersten Kanalabschnitts nach außen abgewinkelt ist.

Der Grundkörper weist vorzugsweise einen den ersten Kanalabschnitt umfassenden ersten Körperbereich auf, wobei der integrierte, erste Kanalabschnitt einen Anschluss für eine Zuführeinrichtung, insbesondere einen Schlauch, zum Zuführen des viskosen Materialgemischs bildet. Bevorzugt umfasst der erste Kanalabschnitt wenigstens eine Haftfläche, um bspw. einen den Kanalabschnitt eingeführten Schlauch zu fixieren.

Bevorzugt weist der Grundkörper einen den zweiten Kanalabschnitt umfassenden zweiten Körperbereich auf, dessen Wandstärke sich zur Austrittsöffnung hin verjüngt. Die Düse weist dadurch ein reduziertes Gewicht auf, wobei Materialkosten verringert sind.

Besonders vorteilhaft ist, wenn der Grundkörper wenigstens eine Düsenkante an der Austrittsöffnung umfasst, auf die eine Innenfläche, insbesondere des Innenkonus, des zweiten Kanalabschnitts zuläuft. Die Düsenkante weist vorzugsweise ein dünne Wanddicke auf, um den Wulstauftrag zu verbessern.

Nach einem nebengeordneten Aspekt betrifft die Erfindung eine Vorrichtung zum schichtweisen Aufbau eines Bauteils, insbesondere zum 3D-Drucken eines Rohlings, mit wenigstens einer Düse nach einem der vorhergehenden Ansprüche, und wenigstens eine Mischeinheit zum Mischen zweier, viskoser Materialbestandteile zur Bildung eines 2-Komponentensystems, wobei die Mischeinheit mit dem ersten Kanalabschnitt des Düsenkanals der Düse zum Zuführen des 2-Komponentensystems verbunden ist.

Es ist möglich, dass zur Herstellung von Bauteilen unterschiedlicher Wandstärke mehrere Düsen bereitgestellt sind, die mit der Mischeinheit verbindbar sind. Bspw. kann ein Magazin vorgesehen sein, das mehrere Düsen mit unterschiedlich großen Austrittsdurchmessern D_{A} der Austrittsöffnungen der Düsenkanäle aufnimmt.

Bei einer bevorzugten Ausführungsform der erfindungsgemäßen Vorrichtung ist die Vorrichtung ein Industrieroboter und die Mischeinheit Teil eines Mischkopfes, wobei der Mischkopf an einer Roboterhand des Industrieroboters befestigt ist. Dies ist insbesondere von Vorteil, wenn ein Bauteil im 3D-Druckverfahren herzustellen ist, da das Bauteil bevorzugt vollautomatisch durch den Industrieroboter herstellbar ist und somit Zeit und Kosten gesenkt sind. Hinzukommend ist das Bauteil mit hoher Präzision herstellbar.

Bei einer Ausführungsform der erfindungsgemäßen Vorrichtung kann die Mischeinheit wenigstens eine Ableitung, insbesondere ein Kunststoffröhrchen, aufweisen, das in den ersten Kanalabschnitt zumindest teilweise derart eingeführt ist, dass die Ableitung die Düse hält. Vorzugsweise ist die Ableitung in dem ersten Kanalabschnitt durch einen Pressverbund gehalten. Vorzugsweise kann die Mischeinheit in einem Röhrchenabschnitt angeordnet sein, der sich in Fließrichtung vor der Abteilung befindet, wobei der Mischer der Mischeinheit, insbesondere als eine Mischspirale, zum Mischen des 2-Komponentensystems ausgestaltet sein kann. Dies kann bspw. bei der Herstellung von Formteilen durch den Auftrag des 2-Komponentensystems auf einen Formkern zum Einsatz kommen. Durch die Ausbildung der Verbindung mit der Zuleitung des 2-Komponentensystems innen, bei der sich beim Austritt in die erfindungsgemäße Vorrichtung der Fließquerschnitt erweitert, wird ein Fließvolumen im Bereich der Kante am Übergang einer Zuleitung außen mit einer innen angebrachten Düse vermieden.

Nach einem weiteren nebengeordneten Aspekt betrifft die Erfindung ein Verfahren zur Herstellung eines Bauteils, insbesondere zum Drucken eines Rohlings, unter Verwendung einer Düse gemäß vorstehend beschriebener Art und/oder einer Vorrichtung der vorstehend beschriebenen Art, wobei bei dem Verfahren:
- zwei viskose Materialbestandteile zur Bildung eines 2-Komponentensystms gemischt werden und das 2-Komponentensystem zur Eintrittsöffnung des Düsenkanals der Düse gefordert wird;
- das 2-Komponentensystem den Düsenkanal rückstandslos durchfließt und bei Austritt aus der Austrittsöffnung eine Materialwulst mit einer vorbestimmten Breite bildet; und
- mehrere Materialwülste zur Bildung des Bauteils aufeinander aufgetragen werden.

Bei einer bevorzugten Ausführungsform des erfindungsgemäßen Verfahrens entspricht die Wandstärke des Bauteils im Wesentlichen der Breite der aufeinander aufgetragenen Materialwülste.

Bei einer weiteren bevorzugten Ausführungsform des erfindungsgemäßen Verfahrens erfolgt nach einem Aushärten des aus dem 2-Komponentensystems gebildeten Bauteils, insbesondere Rohlings, eine Fräsbearbeitung zur Bildung einer finalen Außenkontur des Bauteils.

Zu den Vorteilen der Vorrichtung und des Verfahrens zur Herstellung eines Bauteils wird ferner auf die im Zusammenhang mit der Düse erläuterten Vorteile verwiesen. Darüber hinaus können die Vorrichtung und das Verfahren alternativ oder zusätzlich einzelne oder eine Kombination mehrerer zuvor in Bezug auf die Düse genannte Merkmale aufweisen.

Die Erfindung wird nachstehend mit weiteren Einzelheiten unter Bezug auf die beigefügten Zeichnungen näher erläutert. Die dargestellte Ausführungsform stellt ein Beispiel dar, wie die erfindungsgemäße Düse ausgestaltet sein kann.

In diesen zeigen,
- Fig. 1: eine Seitenansicht einer Düse nach einem bevorzugten erfindungsgemäßen Ausführungsbeispiel; und
- Fig. 2: einen Längsschnitt durch die Düse gemäß Fig. 1.

In der nachfolgenden Beschreibung werden für gleich oder gleichwirkende Teile dieselben Bezugsziffern verwendet.

Fig. 1 zeigt eine Düse 10 nach einem bevorzugten erfindungsgemäßen Ausführungsbeispiel. Die Düse 10 dient zum Auftragen eines viskosen und aushärtbaren Materialgemisches als Materialwülste bzw. Materialraupen. Als Materialgemisch kommt vorzugsweise ein 2-Komponentensystem zum Einsatz.

Zur Bildung einer Kontur eines Bauteils oder Bauteilrohlings werden die Materialwülste in Schichten aufeinander aufgetragen. Die Düse 10 dient somit zum 3D-Drucken von Bauteilen bzw. Bauteilrohlingen. Mit anderen Worten kommt die Düse 10 bevorzugt zur Herstellung von 3D-Druckteilen zum Einsatz. Dazu kann die Düse 10 an einem Mischkopf eines Industrieroboters angeordnet sein. Konkret kann die Düse 10 mit einer Mischeinheit des Mischkopfes zum Zuführen des 2-Komponentensystems fluidverbunden sein. Die Düse 10 kann direkt an einem starren Mischkörper der Mischeinheit angeordnet sein.

Alternativ kann die Düse 10 auf ein Ende einer Kunststoffleitung, insbesondere eines Kunststoffröhrchens aufgeschoben sein. Bevorzugt ist dabei das Ende der Kunststoffleitung in die Düse 10 teilweise eingesteckt derart, dass die Düse 10 an dem Schlauchende fest gehalten ist. Der Einsatz der Düse 10 in Kombination mit einem Industrieroboter ermöglicht einen vollautomatisierten Auftrag von Materialwülsten und somit die vollautomatisierte Herstellung eines Bauteils bzw. Bauteilrohlings. Es ist aber auch möglich, dass die Düse 10 teilautomatisiert oder sogar per Hand geführt wird, um ein Bauteil bzw. einen Bauteilrohling herzustellen.

Gemäß Fig. 1 weist die Düse 10 einen Grundkörper 11 und einen in dem Grundkörper 11 ausgebildeten Düsenkanal 12 auf. Der Düsenkanal 12 verläuft vollständig durch den Grundkörper 11. Der Grundkörper 11 weist eine Mittellängsachse L auf, an der entlang der Düsenkanal 12 verläuft. Auf den Grundkörper 11 wird später im Detail eingegangen.

Gemäß Fig. 2 ist ein Längsschnitt durch die Düse 10 gezeigt, wobei die Form des Düsenkanals 12 gut erkennbar ist. Der Düsenkanal 12 umfasst einen ersten Kanalabschnitt 13 und einen zweiten Kanalabschnitt 15, der an den ersten Kanalabschnitt 13 direkt angrenzt. Mit anderen Worten geht der erste Kanalabschnitt 13 in den zweiten Kanalabschnitt 15 in einem Übergang 26 fließend über.

Der erste Kanalabschnitt 13 weist eine Eintrittsöffnung 14 mit einem Durchmesser D_{E} auf. Der zweite Kanalabschnitt 15 weist eine Austrittsöffnung 16 mit einem Austrittsdurchmesser D_{A} auf. Die Austrittsöffnung 16 ist der Eintrittsöffnung 14 gegenüber ausgebildet. Durch die Austrittsöffnung 16 tritt das 2-Komponentensystem im Auftragsbetrieb aus der Düse 10 aus.

Der Düsenkanal 12 erweitert sich zur Austrittsöffnung 16 hin. Konkret erweitert sich der zweite Kanalabschnitt 15 ausgehend von dem ersten Kanalabschnitt 13 derart, dass der Austrittsdurchmesser D_{A} der Austrittsöffnung 16 größer als der Durchmesser D_{E} der Eintrittsöffnung 14 ist. Mit anderen Worten weist die Austrittsöffnung 16 eine kreisförmige Austrittskontur auf, die größer als eine kreisförmige Eintrittskontur der Eintrittsöffnung 14 ist.

In Fig. 2 ist gezeigt, dass sich der Durchflussquerschnitt des Düsenkanals 12 entlang seines Verlaufs ausgehend von dem Übergang 26 bis hin zur Austrittsöffnung 16 des zweiten Kanalabschnitts 15 ausschließlich vergrößert. Der zweite Kanalabschnitt 15 weist dabei einen sich entlang der Mittellängsachse L kontinuierlich erweiternden Durchflussquerschnitt auf. Der Durchflussquerschnitt erweitert sich kreisförmig. Andere Querschnittskonturen sind möglich.

Konkret ist gezeigt, dass der zweite Kanalabschnitt 15 konusförmig ausgebildet ist. Mit anderen Worten ist der zweite Kanalabschnitt 15 durch einen Innenkonus 20 gebildet, der in den Grundkörper 11 eingearbeitet ist. Der zylindrische erste Kanalabschnitt 13 geht somit in den konusförmigen zweiten Kanalabschnitt 15 über, um das 2-Komponentensystem zu überführen.

Wie in Fig. 2 zu sehen ist, ist der erste Kanalabschnitt 13 zylindrisch ausgebildet und weist über seine Länge einen gleichbleibenden Durchmesser auf. Der gleichbleibende Durchmesser entspricht dem Durchmesser D_{E} der Eintrittsöffnung 14 des ersten Kanalabschnitts 13. Mit anderen Worten umfasst der erste Kanalabschnitt 13 über seine Länge einen gleichbleibenden Durchflussquerschnitt. Konkret ist der erste Kanalabschnitt 13 durch eine Bohrung gebildet.

Fig. 2 zeigt ferner, dass der erste Kanalabschnitt 13 und der zweite Kanalabschnitt 15 in Durchflussrichtung des Düsenkanals 12 hinterschnittfrei ausgebildet sind. Konkret bedeutet dies, dass der Düsenkanal 12 und im Besonderen der zweite Kanalabschnitt 15 in Durchflussrichtung des 2-Komponentensystems totraumfrei ausgebildet ist. Dies hat den Vorteil, dass sich keine Teilmenge des 2-Komponentensystems bei einem Auftragsbetrieb ablagern bzw. absetzen kann und so ein Verstopfen der Düse 10 verhindert wird. Der zweite Kanalabschnitt 15 ist somit bevorzugt stufenfrei, insbesondere nischenfrei ausgebildet.

Aus der Fig. 2 geht hervor, dass sich der Innenkonus 20 des zweiten Kanalabschnitts 16 in einem Winkel zwischen 0° und 30°, insbesondere 5° und 20°, bevorzugt im Wesentlichen 15° zur Austrittsöffnung 16 hin erweitert. Der Winkel ist in einer Ebene, die normal auf der Mittellängsachse L steht, zwischen der Mittellängsachse L und einer Fläche 23 des Innenkonus 20 aufgespannt.

Wie in Fig. 1 und 2 zu erkennen ist, umfasst der Grundkörper 11 einen den ersten Kanalabschnitt 13 umfassenden ersten Körperbereich 17, wobei der integrierte, erste Kanalabschnitt einen Anschluss 19 für eine Zuführeinrichtung, insbesondere einen Schlauch, zum Zuführen des 2-Komponentensystems bildet. Der Grundkörper 11 weist einen den zweiten Kanalabschnitt 15 umfassenden zweiten Körperbereich 18 auf, dessen Wandstärke 21 sich zur Austrittsöffnung 16 hin verjüngt.

Des Weiteren geht aus Fig. 2 hervor, dass der Grundkörper 11 eine Düsenkante 22 an der Austrittsöffnung 16 umfasst, auf die die Innenfläche 23 des zweiten Kanalabschnitts 15 bzw. des Innenkonus 20 zuläuft.

Ebenfalls in Fig. 1 und 2 gut erkennbar ist, dass der Grundkörper 11 rotationssymmetrisch ausgebildet ist. Andere Körperformen sind möglich. Der zweite Körperbereich 18 erstreckt sich radial über den ersten Körperbereich 17 hinaus. Mit anderen Worten ist der zweite Körperbereich 18 radial größer als der erste Körperbereich 17. Bevorzugt weist der Grundkörper 11 eine Länge entlang der Mittellängsachse L von 50 mm bis 100 mm, insbesondere 60 mm bis 90 mm, besonders bevorzugt von 70 mm bis 80 mm auf. Andere Längen sind möglich.

Ferner umfasst der Grundkörper 11 ein erstes Längsende 24 und ein zweites Längsende 25, die in Längsrichtung gegenüber angeordnet sind. Das erste Längsende 24 umfasst die Eintrittsöffnung 14 des Düsenkanals 12. Das zweite Längsende 25 weist die Austrittsöffnung 16 des Düsenkanals 12 auf. Das erste Längsende 24 schließt den ersten Körperbereich 17 und das zweite Längsende 25 den zweiten Körperbereich 18 ab.

Im Folgenden wird ein mögliches Herstellungsverfahren mittels 3D-Druck eines Bauteils bzw. Bauteilrohlings unter Verwendung der Düse 10 beschrieben. Bei dem Verfahren werden zwei Materialbestandteile zur Bildung eines 2-Komponentensystms gemischt und das 2-Komponentensystem zur Eintrittsöffnung 14 des Düsenkanals 12 der Düse 10 gefordert. Anschließend durchfließt das 2-Komponentensystem den Düsenkanal 12 aufgrund der hinterschnittfreien Kanalkontur rückstandslos. Bei Austritt des 2-Komponentensystems aus der Austrittsöffnung 16 wird eine Materialwulst mit einer bestimmten Breite gebildet, die größer als der Durchmesser D_{E} der Eintrittsöffnung 14 ist. Es werden dann mehrere Materialwülste zur Bildung eines 3D-Druck-Bauteils bzw. eines 3D-Druck-Rohlings aufeinander aufgetragen. Die Wandstärke des 3D-Druck-Bauteils bzw. des 3D-Druck-Rohlings entspricht im Wesentlichen der Breite der aufeinander aufgetragenen Materialwülste. Nach einem Aushärten des 3D-Druckbauteils- bzw. - rohlings erfolgt zur Bildung der finalen Außenkontur des Bauteils eine Fräsbearbeitung, in dem die durch den 3D-Druck erzeugte Bauteil- oder Rohlingskontur abgefräst wird.

### Bezugszeichenliste

- 10: Düse
- 11: Grundkörper
- 12: Düsenkanal
- 13: erster Kanalabschnitt
- 14: Eintrittsöffnung
- 15: zweiter Kanalabschnitt
- 16: Austrittsöffnung
- 17: erster Körperbereich
- 18: zweiter Körperbereich
- 19: Anschluss
- 20: Innenkonus
- 21: Wandstärke
- 22: Düsenkante
- 23: Innenfläche
- 24: erstes Längsende
- 25: zweites Längsende
- 26: Übergang

- D_{E}: Durchmesser der Eintrittsöffnung
- D_{A}: Austrittsdurchmesser der Austrittsöffnung
- L: Mittellängsachse

## Patentansprüche

1. Düse (10) für eine Vorrichtung zum schichtweisen Aufbau eines Bauteils, insbesondere zum 3D-Drucken eines Rohlings, mit einem Grundkörper (11) und wenigstens einem durch den Grundkörper (11) verlaufenden Düsenkanal (12), wobei der Düsenkanal (12) einen ersten Kanalabschnitt (13) mit einer Eintrittsöffnung (14) und einen anschließenden, zweiten Kanalabschnitt (15) mit einer Austrittsöffnung (16) für ein viskoses Materialgemisch, insbesondere 2-Komponentensystem, aufweist,
**dadurch gekennzeichnet, dass**
sich der zweite Kanalabschnitt (15) ausgehend von dem ersten Kanalabschnitt (13) derart erweitert, dass die Austrittsöffnung (16) einen Austrittsdurchmesser D_{A} aufweist, der größer als ein Durchmesser D_{E} der Eintrittsöffnung (14) ist.

2. Düse (10) nach Anspruch 1,
**dadurch gekennzeichnet, dass**
sich der Durchflussquerschnitt des Düsenkanals (12) entlang seines Verlaufs ausgehend von dem ersten Kanalabschnitt (13) bis hin zur Austrittsöffnung (16) des zweiten Kanalabschnitts (15) ausschließlich vergrößert.

3. Düse (10) nach Anspruch 1 oder 2,
**dadurch gekennzeichnet, dass**
der Düsenkanal (12), insbesondere der zweite Kanalabschnitt (15), hinterschneidungsfrei, insbesondere totraumfrei, ausgebildet ist.

4. Düse (10) nach einem der vorhergehenden Ansprüche,
**dadurch gekennzeichnet, dass**
der erste Kanalabschnitt (13) über seine Länge einen im Wesentlichen gleichbleibenden Querschnitt, insbesondere Durchmesser, aufweist und/oder der zweite Kanalabschnitt (15) einen sich über seine Länge kontinuierlich erweiternden Durchflussquerschnitt aufweist.

5. Düse (10) nach einem der vorhergehenden Ansprüche,
**dadurch gekennzeichnet, dass**
der erste Kanalabschnitt (13) zylinderförmig und/oder der zweite Kanalabschnitt (15) konusförmig, insbesondere als Innenkonus (20), ausgebildet ist.

6. Düse (10) nach einem der vorhergehenden Ansprüche,
**dadurch gekennzeichnet, dass**
der zweite Kanalabschnitt (15) mit einem Winkel zwischen 0° und 30°, insbesondere 5° und 20°, bevorzugt im Wesentlichen 15° zur Austrittsöffnung (16) hin erweitert.

7. Düse (10) nach einem der vorhergehenden Ansprüche,
**dadurch gekennzeichnet, dass**
der Grundkörper (11) einen den ersten Kanalabschnitt (13) umfassenden ersten Körperbereich (17) aufweist, wobei der integrierte, erste Kanalabschnitt einen Anschluss (19) für eine Zuführeinrichtung, insbesondere einen Schlauch, zum Zuführen des viskosen Materialgemischs bildet.

8. Düse (10) nach einem der vorhergehenden Ansprüche,
**dadurch gekennzeichnet, dass**
der Grundkörper (11) einen den zweiten Kanalabschnitt (15) umfassenden zweiten Körperbereich (18) aufweist, dessen Wandstärke (21) sich zur Austrittsöffnung (16) hin verjüngt.

9. Düse (10) nach einem der vorhergehenden Ansprüche,
**dadurch gekennzeichnet, dass**
der Grundkörper (11) wenigstens eine Düsenkante (22) an der Austrittsöffnung (16) umfasst, auf die eine Innenfläche (23) des zweiten Kanalabschnitts (15) zuläuft.

10. Vorrichtung zum schichtweisen Aufbau eines Bauteils, insbesondere zum 3D-Drucken eines Rohlings, mit wenigstens einer Düse (10) nach einem der vorhergehenden Ansprüche, und wenigstens eine Mischeinheit zum Mischen zweier, viskoser Materialbestandteile zur Bildung eines 2-Komponentensystems, wobei die Mischeinheit mit dem ersten Kanalabschnitt (13) des Düsenkanals (12) der Düse (10) zum Zuführen des 2-Komponentensystems verbunden ist.

11. Vorrichtung nach Anspruch 10,
**dadurch gekennzeichnet, dass**
die Vorrichtung ein Industrieroboter ist und die Mischeinheit Teil eines Mischkopfes ist, wobei der Mischkopf an einer Roboterhand des Industrieroboters befestigt ist.

12. Vorrichtung nach Anspruch 10 oder 11,
**dadurch gekennzeichnet, dass**
die Mischeinheit wenigstens eine Ableitung, insbesondere ein Kunststoffröhrchen, aufweist, das in den ersten Kanalabschnitt (13) zumindest teilweise derart eingeführt ist, dass die Ableitung die Düse (10) hält.

13. Verfahren zur Herstellung eines Bauteils, insbesondere zum 3D-Drucken eines Rohlings, unter Verwendung einer Düse (10) nach einem der Ansprüche 1 bis 9 und/oder einer Vorrichtung nach einem der Ansprüche 10 bis 12, wobei bei dem Verfahren:
- zwei viskose Materialbestandteile zur Bildung eines 2-Komponentensystms gemischt werden und das 2-Komponentensystem zur Eintrittsöffnung (14) des Düsenkanals (12) der Düse (10) gefördert wird;
- das 2-Komponentensystem den Düsenkanal (12) rückstandslos durchfließt und bei Austritt aus der Austrittsöffnung (16) eine Materialwulst mit einer Breite bildet, die größer als die Breite der Eintrittsöffnung (14) ist; und
- mehrere Materialwülste zur Bildung des schichtweise aufgebauten Bauteils aufeinander aufgetragen werden.

14. Verfahren nach Anspruch 13,
**dadurch gekennzeichnet, dass**
die Wandstärke des Bauteils im Wesentlichen der Breite der aufeinander aufgetragenen Materialwülste entspricht.

15. Verfahren nach Anspruch 13 oder 14,
**dadurch gekennzeichnet, dass**
nach einem Aushärten des aus dem 2-Komponentensystems gebildeten Bauteils, insbesondere Rohlings, eine Fräsbearbeitung zur Bildung einer finalen Außenkontur des Bauteils erfolgt.
